# EUROPEAN PATENT SPECIFICATION

(11) **EP 3 960 403 B1**
(45) Date of publication and mention of the grant of the patent: **26.06.2024**
(21) Application number: 21168159.8
(22) Date of filing: 13.04.2021
(51) Int. Cl.: B26D 7/06, B26D 7/08, B65B 69/00

(54) **CONTAINER CUTTING APPARATUS**
BEHÄLTERSCHNEIDVORRICHTUNG
APPAREIL DE DÉCOUPE DE CONTENANT

(30) Priority: 27.08.2020 US 202017004679
(43) Date of publication of application: 02.03.2022
(73) Proprietor: Google LLC, Mountain View, CA 94043 (US)
(72) Inventor: RAVI, Nivedita, Mountain View, CA 94043 (US)
(74) Representative: Betten & Resch

(56) References cited:
- WO-A1-2018/230718
- DE-A1-102016 007 083
- US-A- 6 070 509
- US-B1- 9 457 474
- US-B2- 8 463 428

## Description

### BACKGROUND

This specification relates to an apparatus for cutting containers.

In commercial facilities including, for example, data centers, warehouses, factories, and storage facilities, large volumes of containers are received and unpacked on a daily basis. For example, everyday a data center can receive hundreds or thousands of packages of computer infrastructure equipment and devices that are used to support data center operations. Manually opening packages at this volume can be time-consuming and also unsafe due to possible cut or laceration injuries caused by cutting tools that are used to open these packages. Conventionally, the cutting tools include standard, handheld ultrasonic and pneumatic cutters, e.g., blades, knives, scissors, or snips. Cutting container surfaces through consistent shear force shortens the lifespan of the cutting tools, and thus increases operation costs due to tool replacement.

WO2018/230718A1 discloses a packaging container opening device and a packaging container opening method with which it is possible to open a packaging box efficiently, while preventing damage to an object accommodated in the packaging box.

US6070509A discloses a conveyor moving food product, such as pies or cakes, within a cutting range of a knife positioning assembly.

US8463428B2 discloses an apparatus including a conveyor, a programmable motion device, and a controller, the programmable motion device being a robotic arm. The controller operates the conveyor, a stopping rail, and a positioning rail to move and position a box in a cutting position relative to the robotic arm. The controller determines three dimension of the box and translates a programmed cut pattern to those determined dimensions. Based on the determined dimensions, the controller then operates the robotic arm to perform the programmed cut pattern in the box with the cutting element.

US9457474 B1 discloses conveying systems for transporting sealed containers, such as boxes, provided with one or more delta robots configured to cut one or more adhesive tapes or other layers provided on the sealed containers.

DE 10 2016 007083 A1 discloses a cutter and a method for opening a carton with multiple curved ultrasonic blades. A container positioner that secures a container in a position relative to the ultrasonic cutting blades so that the cutting edges of the ultrasonic cutting blades may be positioned to be in contact with a flat surface of the container; a press actuator that causes the flat surface of the container and the curved cutting edges of the ultrasonic cutting blades to press against each other, a control system that operates the ultrasonic cutting blade and the press actuator to cause the ultrasonic cutting blade to vibrate ultrasonically while the container and the flat cutting edge of the ultrasonic cutting blade press against each other until the ultrasonic cutting blades penetrates the flat surface of the container by a predefined depth; thereafter the blades and the carton are moved longitudinally relatively to each other in order to open the carton.

### SUMMARY

The invention is defined by the independent claims. Dependent claims define embodiments thereof.

This specification describes technologies relating to apparatuses for cutting containers. In general, one innovative aspect of the subject matter described in this specification can be embodied in methods performed by apparatus that include the actions of positioning a container in a position relative to an ultrasonic cutting blade so that a flat cutting edge of the ultrasonic cutting blade may be positioned to be in contact with a flat surface of the container; operating a press actuator to cause the flat surface of the container and the flat cutting edge of the ultrasonic cutting blade to press against each other; and operating the ultrasonic cutting blade and the press actuator to cause the ultrasonic cutting blade to vibrate ultrasonically while the container and the flat cutting edge of the ultrasonic cutting blade press against each other until the ultrasonic cutting blade penetrates the flat surface of the container by a predefined depth.

The methods may further comprise causing the ultrasonic cutting blade to move relative to the container. The method may further comprise causing the container to move relative to the ultrasonic cutting blade. The methods may further comprise operating a conveyor system to move the container relative to the ultrasonic cutting blade. The press actuator may comprise a robot. The methods may further comprise attaching the ultrasonic cutting blade to an arm of the robot; and operating the conveyor system to move the container to a work envelope of the robot. The methods may further comprise positioning the ultrasonic cutting blade substantially normal to the flat surface of the container. The methods may further comprise positioning the ultrasonic cutting blade at an acute angle to the flat surface of the container. The methods may further comprise adapting the predefined depth based on a thickness of the first surface of the container. The methods may further comprise operating the ultrasonic cutting blade to cut on a plurality of flat surfaces of the container.

Other embodiments of this aspect include corresponding systems and apparatus configured to perform the actions of the methods.

Particular embodiments of the subject matter described in this specification can be implemented so as to realize one or more of the following advantages. The techniques described in this specification allow for automated cutting of large volumes of containers and can easily integrate into and cooperate with many existing equipment to facilitate automatic lid removal and content retrieval.

By penetrating one or more surfaces of a container through ultrasonic vibration, e.g., in place of shearing motion, the apparatus can effectively cut the container while preserving blade health. This can ensure consistent and neat cuts at multiple surfaces of the container, even when the container is dampened, bent, or crushed, or when the operation environment is humid or heated. This can also reduce long-term costs because the blades are replaced less frequently.

Hazardous heat or fume that would otherwise be caused by dragging a conventional blade through the container surface can also be reduced, rendering the entire operation environment not only safer but also healthier for human operators.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example system including a container cutting apparatus.
FIG. 2 shows an example implementation of the container cutting apparatus of FIG. 1.
FIG. 3 shows a flow diagram of an example process for cutting a container.

Like reference numbers and designations in the various drawings indicate like elements.

### DETAILED DESCRIPTION

The subject matter of this application discloses an apparatus that can facilitate automated cutting of containers by using an ultrasonic cutting blade.

In the context of this description, a "container" refers to a box or package of any size and shape, as appropriate to its type and content. For example, containers can include cardboard boxes, paperboard boxes, corrugated boxes, and the like.

By penetrating one or more surfaces of a container through ultrasonic vibration, e.g., in place of shearing motion, the apparatus can effectively cut the container while preserving blade health.

In operation, the apparatus includes an ultrasonic cutting blade that has a flat cutting edge of a cutting length. The exact cutting lengths of the flat cutting edge may vary, e.g., depending on actual configuration of the apparatus or application scenarios, but typically, the flat cutting edge is at least 50.8 centimeters in length. This can minimize the need of moving the cutting blade, e.g., horizontally or vertically, when cutting each single surface of the container.

The apparatus includes a container positioner, a press actuator, and, in some implementations, a conveyor system. The container positioner secures the container in a position relative to the ultrasonic cutting blade so that the flat cutting edge of the ultrasonic cutting blade may be positioned to be in contact with a flat surface of the container.

The press actuator causes the flat surface of the container and the flat cutting edge of the ultrasonic cutting blade to press against each other. To do so, the press actuator can move either the container, the ultrasonic cutting blade, or both. For example, the press actuator moves the ultrasonic cutting blade relative to the container, i.e., while the container remains secured to the stationary container positioner. As another example, the press actuator moves the container relative to the ultrasonic cutting blade that is mounted on a stationary surface.

In general the press actuator can be any apparatus that can perform the actuating mechanism. In some implementations, the press actuator is a robot, e.g., a 6 Degree of Freedom (DoF) industrial robot, with an ultrasonic cutting blade attached to an end of a robot arm.

When in contact with each other, the ultrasonic cutting blade can be positioned substantially normal to the flat surface of the container. Alternatively, the ultrasonic cutting blade can be positioned at an acute angle to the flat surface of the container.

The conveyor system, when included, is operable to transport, e.g., at predetermined intervals and in cooperation with the container positioner, different containers towards or away from the ultrasonic cutting blade, and thus improves operation efficiency.

The apparatus also includes a control system that issues control signals to drive the operations of the remaining components of the apparatus. In particular, the control system issues control signals to the ultrasonic cutting blade and the press actuator to cause the ultrasonic cutting blade to vibrate ultrasonically while the container and the flat cutting edge of the ultrasonic cutting blade press against each other until the ultrasonic cutting blade penetrates the flat surface of the container by a predefined depth. In a similar way, the control system can also operate the ultrasonic cutting blade to cut on other flat surfaces of the container.

In some implementations, the predefined depth is a depth that corresponds to a thickness of the first surface of the container. For example, the control system can adjust the value of the predefined depth based on inputs received from a system operator or measurements captured by one or more sensors.

In some implementations, to ensure penetration of container surfaces that are of varying thicknesses, the control system can adapt the time of contact between the ultrasonic cutting blade and the container surface, the amplitude or frequency of the vibration of the ultrasonic cutting blade, or both.

These features and additional features will be described in more detail below.

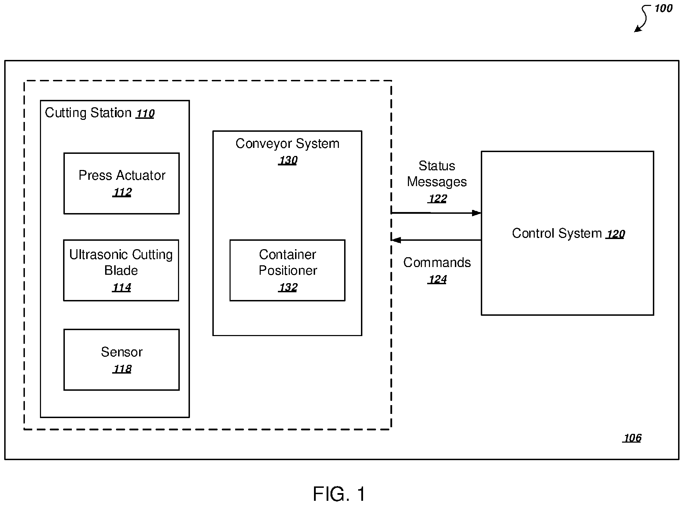

FIG. 1 shows an example system 100 including a container cutting apparatus 106. The system 100 is an example of a system that can implement the container cutting techniques described in this specification.

The container cutting apparatus 106 includes a number of functional components, including a cutting station 110, a control system 120, and, optionally, a conveyor system 130.

In some implementations, the cutting station 110 in turn includes one or more press actuators, e.g., press actuator 112, one or more ultrasonic cutting blades, e.g., ultrasonic blade 114, and one or more sensors, e.g., sensor 118. As illustrated in FIG. 1, each cutting station 110 includes one press actuator 112, and one ultrasonic cutting blade 114 is coupled to the press actuator 112. However, the press actuators need not have a one-to-one correspondence with ultrasonic cutting blades, and there may be a different number of press actuators, or a different number of ultrasonic cutting blades. Additionally, each cutting station 110 can have multiple sensors, and the sensors can be mounted on stationary or movable surfaces of the ultrasonic cutting apparatus 106.

In particular, the ultrasonic cutting blade 114 refers to a cutting device that is operable to carry out cutting operations through ultrasonic vibration. Such a blade is typically formed into a flat or inclined plate shape, with at least one flat cutting edge serving as a contact surface against a container. The ultrasonic cutting blade 114 can be activated, i.e., ultrasonically vibrated by an ultrasonic oscillator or vibrator, as the blade 114 is placed in a position at which the flat cutting edge can pressure contact a flat surface of the container. When ultrasonically vibrated, the blade 114 applies a force acting along a fixed cutting direction, e.g., perpendicularly or at an acute angle, to the contacting surface of the container to cut out material, i.e., along a cutting line that is substantially parallel to the flat cutting edge of the blade 114, from the flat surface of the container.

In some implementations, the ultrasonic cutting blade 114 is attached to some actuating mechanism. For example, the ultrasonic cutting blade 114 can be mounted atop the press actuator 112 that is capable of bringing the ultrasonic cutting blade 114 into pressure contact with one or more surfaces of the container. In general, the press actuator 112 can be a robot manipulator with any of a variety of designs, from a robotic arm with a single prismatic joint, to a gantry system, to an articulated robot movable in up to six axes, among other examples. With such a configuration, the running cost can be reduced, and the restriction on cutting positions can be relaxed.

In some implementations, the ultrasonic cutting blade 114 is mounted atop a stationary surface. To carry out the cutting operation, the containers are then being brought into pressure contact with the ultrasonic cutting blade 114 by some robotic mechanism, for example, by the press actuator 112 which can be similarly configured as a robot manipulator.

In both implementations, the ultrasonic cutting blade 114 may, but need not, be moved relative to the container while being ultrasonically vibrated to cut a particular surface of the container. Specifically, in cases according to the invention, where the flat cutting edge runs at least a length of a largest dimension (e.g., length, width, or height) of the container, the cutting station 110 can penetrate each of one or more surfaces of the container through sheer ultrasonic vibration. That is, the cutting station 110 can cut the particular surface of the container without the need of moving, e.g., dragging, the ultrasonic cutting blade 114 along the cutting line on each particular surface of the container.

As a particular example, hardware devices (e.g., desktops, routers, and hard drives) being delivered to a data center are packed in containers the lengths of which rarely exceed 50.8 centimeters. Thus, when equipped with an ultrasonic cutting blade 114 having a flat cutting edge that is at least 50.8 centimeters in length, the cutting station 110 can typically cut a surface of the container while holding the container, the ultrasonic cutting blade 114, or both at a stationary pose by using the press actuator 112.

The container cutting apparatus 106 also includes a container positioner 132 which is configurable to secure one or more containers each in a respective fixed position, e.g., relative to the ultrasonic cutting blade 114, during the cutting operation and thereby facilitates precise cutting. The container positioner 132 can be any appropriate object holding device, including, for example, locators and clamps. The conveyor system 130, when included, is operable to transport, e.g., at predetermined intervals and in cooperation with the container positioner 132, different containers towards or away from the ultrasonic cutting blade 114, and thus improves operation efficiency. Roller conveyors, chain conveyors, and conveyor belts as commonly used in manufacturing facilities are example of such conveyor systems. In fact, in some implementations, the container positioner 132 can be part of the conveyor system 130. For example, the conveyor system 130 can be a roller conveyor with one or more object holding fixtures installed atop the roller conveyor.

In some implementations, the control system 120 can be implemented as computer programs installed on one or more computers in one or more locations that are coupled to other components of the container cutting apparatus 106 through any appropriate communications network, e.g., an intranet or the Internet, or combination of networks.

In general, the control system 120 provides commands 124 to be executed by the cutting station 110, which drive the cutting station 110, including the press actuator 112, the ultrasonic cutting blade 114, and/or the sensor 118 within the cutting station 110, the container positioner 132, and/or the conveyor system 130. The overall goal of the control system 120 is to generate a sequence of commands 124 that will be executed by theses functional components of the container cutting apparatus 106 to perform one or more actions related to container cutting. In order to compute the commands 124, the control system 120 consumes status messages 122 generated by the cutting station 110, conveyor system 130, or both.

For example, the status messages 122 can include observations made by the sensor 118 making observations within the cutting station 110. As another example, the status messages 122 can specify the make/model/configuration/health of the actual ultrasonic cutting blade 114 that is used in the cutting station 110. As another example, the status messages 122 can include runtime statistics or feedbacks from the press actuator 112 or the conveyor system 130.

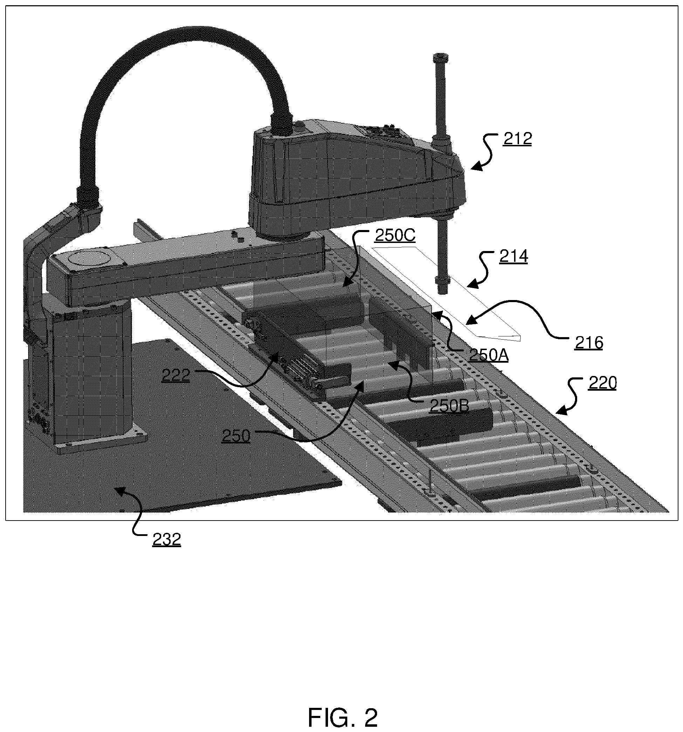

FIG. 2 shows an example implementation of the container cutting apparatus of FIG. 1.

As shown in FIG. 2, the container cutting apparatus includes an ultrasonic cutting blade 214 that is formed into an inclined plate shape. The ultrasonic cutting blade 214 has a flat cutting edge 216 defining a cutting length.

The ultrasonic cutting blade 214 is attached to an end side of a press actuator 212 that is configured as a Selective Compliance Articulated Robot Arm ("SCARA robot"). The press actuator 212 is supported by a stationary horizontal base 232.

The container cutting apparatus also includes a conveyor system 220 that is configured as a roller conveyor, and a container positioner 222 that is configured as a set of clamps. The roller conveyor is operable to transport different containers, e.g., container 250, towards or away from a work envelope (i.e., a range of movement) of the press actuator 212 holding the ultrasonic cutting blade 214. The clamps are operable to close down on the container 250 to secure it on the roller conveyor for cutting.

To cut a first surface 250A of the container 250, the press actuator 212 aligns the flat cutting edge 216 of the ultrasonic cutting blade 214 with a predetermined cutting line along the first surface 250A of the container 250. For example, the predetermined cutting line is a line that is substantially parallel to an edge of the container and is 2.54 centimeters below a top surface 250C of the container 250. The alignment involves the press actuator 212 bringing the flat cutting edge 216 of the ultrasonic cutting blade 214 into pressure contact with the first surface 250A of the container 250. Once activated, the flat cutting edge 216 starts to cut away material of the first surface 250A of the container 250 through ultrasonic vibration. The press actuator 212 maintains the pressure contact until the flat cutting edge 216 has penetrated a predefined depth of the first surface 250A, for example, according to sensor measurements or after a predetermined period of time has elapsed. Specifically, during the cutting operation, the press actuator 212 maintains the ultrasonic cutting blade 214 at a stationary pose relative to the container 250, insofar as the flat cutting edge 216 of the blade 214 runs a cutting length that is at least a length of the first surface 250A of the container 250.

If it is determined that a second surface 250B of the container 250 will also need to be cut, the press actuator 212 can thereafter move the ultrasonic cutting blade 214 so as to align the flat cutting edge 216 with a predetermined cutting line along the second surface 250B of the container 250.

After cutting each of multiple surfaces of the container 250 in this way, the conveyor system 220 can then transport the already cut container 250 to a next station at which the top part of the container can be removed, for example, by another apparatus with suction means or by a human operator. The conveyor system 220 can also transport another container into the work envelope of the press actuator 212 so that the other container can be cut by using the ultrasonic cutting blade 214.

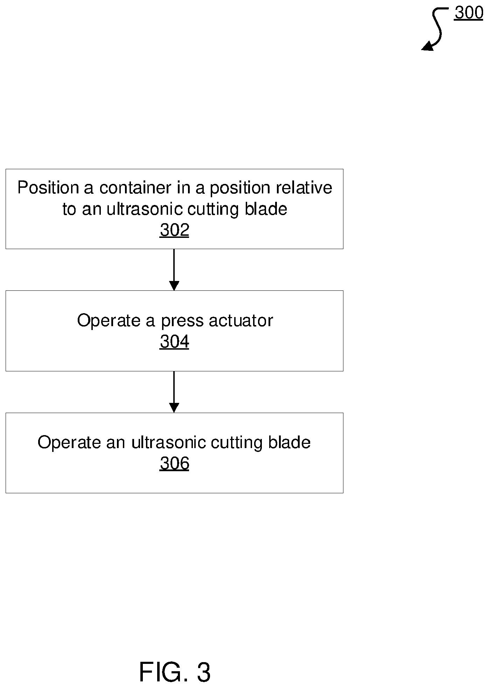

FIG. 3 shows a flow diagram of an example process 300 for cutting a container. For convenience, the process 300 will be described as being performed by a system including a container cutting apparatus, e.g., the system 100 of FIG. 1 which includes the container cutting apparatus 106.

The system positions the container in a position relative to an ultrasonic cutting blade (302) so that a flat cutting edge of the ultrasonic cutting blade may be positioned to be in contact with a flat surface of the container. Generally the position can be any position that is feasible for the system to cut one or more flat surfaces of the container with an ultrasonic cutting blade. The system can transport the container to the position by use of a conveyor system. Upon entering the position, the system can secure the container in the position by use of a container positioner.

The system operates a press actuator to cause the flat surface of the container and the flat cutting edge of the ultrasonic cutting blade to press against each other (304). To do so, the system can operation the press actuator to move either the container, the ultrasonic cutting blade, or both. For example, the system can operate the press actuator to move the ultrasonic cutting blade into contact with the flat surface of the container, while the container remains secured to the stationary container positioner. As another example, the press actuator moves the container into contact with the flat cutting edge of the ultrasonic cutting blade, while the ultrasonic cutting blade is mounted on a stationary surface.

When in contact with each other, the system can position the ultrasonic cutting blade at a fixed cutting direction with respect to the flat surface of the container. For example, the system can maintain the ultrasonic cutting blade at a cutting direction that is substantially perpendicular to the flat surface of the container. As another example, the system can maintain the ultrasonic cutting blade at an acute angle with respect to the flat surface of the container.

The system operates the ultrasonic cutting blade and the press actuator to cause the ultrasonic cutting blade to vibrate ultrasonically (306). To cause the ultrasonic cutting blade to vibrate ultrasonically, the system can drive an ultrasonic oscillator or vibrator coupled to the blade.

The system can also operate the press actuator to cause the container and the flat cutting edge of the ultrasonic cutting blade to press against each other until the ultrasonic cutting blade being vibrated ultrasonically penetrates the flat surface of the container by a predefined depth. The system can monitor a penetration depth of the flat surface by the ultrasonic cutting blade from latest sensor readings returned by one or more sensors, data derived from the latest sensor readings, or both. The predefined depth is typically a value that is dependent on the actual type of the container. For example, the predefined depth can be determined from (e.g., as deep as) respective thicknesses of the surfaces of the container. In particular, the system can operate the press actuator to maintain the pressure contact until the flat cutting edge has penetrated the predefined depth of the flat surface of the container.

In some implementations, the system can adjust the value of the predefined depth based on inputs received from a system operator or measurements captured by one or more sensors.

In some implementations, to ensure penetration of container surfaces that are of varying thicknesses, the system can adapt the time of contact between the ultrasonic cutting blade and the container surface, the amplitude or frequency of the vibration of the ultrasonic cutting blade, or both.

In particular, the system may, but need not, move the ultrasonic cutting blade in a direction along a predetermined cutting line on the flat surface. In this way, the ultrasonic cutting blade having the flat cutting edge maintains its pose which provides a contact surface along the predetermined cutting line, and the flat cutting edge is always directed in the cutting direction while the ultrasonic cutting blade is being ultrasonically vibrated.

After cutting the flat surface of the container in this way, the system can repeat the process 300 to cut another flat surface of the container. Specifically, the process 300 returns to step 302, i.e., the system positions the container in a position relative to the ultrasonic cutting blade so that the flat cutting edge of the ultrasonic cutting blade may be positioned to be in contact with the other flat surface of the container.

Furthermore, by implementing multiple ultrasonic cutting blades, the system can simultaneously cut multiple flat surfaces of the container, with each of the multiple flat surfaces being cut according to the steps of the process 300.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus.

A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal.

The operations described in this specification can be implemented as operations performed by a data processing apparatus on data stored on one or more computer-readable storage devices or received from other sources. The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., a FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

While this specification contains many specific implementation details, these should not be construed as limitations on the scope of any features or of what may be claimed, but rather as descriptions of features specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. An apparatus (100), comprising:
an ultrasonic cutting blade (214) that has a flat cutting edge (216) of a cutting length;
a container positioner (222) that secures a container (250) in a position relative to the ultrasonic cutting blade (214) so that the flat cutting edge (216) of the ultrasonic cutting blade (214) may be positioned to be in contact with a flat surface (250A) of the container (250);
a press actuator (212) that causes the flat surface (250A) of the container (250) and the flat cutting edge (216) of the ultrasonic cutting blade (214) to press against each other,
a control system (120) that operates the ultrasonic cutting blade (214) and the press actuator (212) to cause the ultrasonic cutting blade (214) to vibrate ultrasonically while the container (250) and the flat cutting edge (216) of the ultrasonic cutting blade (214) press against each other until the ultrasonic cutting blade (214) penetrates the flat surface (250A) of the container by a predefined depth;
wherein the control system (120) is configured to cause the press actuator (212) to align the flat cutting edge (216) of the ultrasonic cutting blade (214) with a predetermined cutting line along the first surface (250A) of the container (250), the predetermined cutting line being substantially parallel to an edge of the container and about 2.54 centimeters below a top surface (250C) of the container (250); and
wherein the control system (120) is configured to cause the press actuator (212) to maintain the ultrasonic cutting blade (214) at a stationary pose relative to the container (250) during a cutting operation and run the flat cutting edge (216) of the blade (214) a cutting length that is at least a length of the first surface (250A) of the container (250).

2. The apparatus of claim 1, wherein the control system (120) is configured to cause the ultrasonic cutting blade (214) to move relative to the container (250).

3. The apparatus of claim 1,
wherein the control system (120) is configured to cause the container (250) to move relative to the ultrasonic cutting blade (214); and/or
wherein the apparatus further comprises a conveyor system (220) that operates to move the container (250) relative to the ultrasonic cutting blade (214).

4. The apparatus of any one of claims 1 to 3, wherein:
the press actuator (212) comprises a robot;
the ultrasonic cutting blade (214) is attached to an arm of the robot; and
the conveyor system (220) is operable to move the container (250) to a work envelope of the robot.

5. The apparatus of any one of claims 1 to 4, wherein the cutting length is at least 50.8 centimeters.

6. The apparatus of any one of claims 1 to 5,
wherein the ultrasonic cutting blade (214) is positioned substantially normal to the flat surface of the container (250); or
wherein the ultrasonic cutting blade (214) is positioned at an acute angle to the flat surface of the container (250).

7. The apparatus of any one of claims 1 to 6, wherein the predefined depth is a depth that corresponds to a thickness of the first surface (250A) of the container (250).

8. The apparatus of any one of claims 1 to 7, wherein the control system (120) is configured to operate the ultrasonic cutting blade (214) to cut on a plurality of flat surfaces (250A, 250B, 250C) of the container (250).

9. A method (300) comprising:
positioning (302) a container (250) in a position relative to an ultrasonic cutting blade (214) so that a flat cutting edge (216) of the ultrasonic cutting blade (214) may be positioned to be in contact with a flat surface (250A) of the container (250);
operating (304) a press actuator (212) to cause the flat surface (250A) of the container (250) and the flat cutting edge (216) of the ultrasonic cutting blade (214) to press against each other and to cause the flat cutting edge (216) of the ultrasonic cutting blade (214) to align with a predetermined cutting line along the first surface (250A) of the container (250), the predetermined cutting line being substantially parallel to an edge of the container and about 2.54 centimeters below a top surface (250C) of the container (250), and
operating the press actuator (212) to maintain the ultrasonic cutting blade (214) at a stationary pose relative to the container (250) during a cutting operation and to run the flat cutting edge (216) of the blade (214) a cutting length that is at least a length of the first surface (250A) of the container (250); and
operating (306) the ultrasonic cutting blade (214) and the press actuator (212) to cause the ultrasonic cutting blade (214) to vibrate ultrasonically while the flat surface (250A) of the container (250) and the flat cutting edge (216) of the ultrasonic cutting blade (214) press against each other until the ultrasonic cutting blade (214) penetrates the flat surface (250A) of the container (250) by a predefined depth.

10. The method of claim 9, further comprising causing the ultrasonic cutting blade (214) to move relative to the container (250).

11. The method of claim 9,
further comprising causing the container (250) to move relative to the ultrasonic cutting blade (214); and/or
further comprising operating a conveyor system (220) to move the container (250) relative to the ultrasonic cutting blade (214).

12. The method of any one of claims 9 to 11, wherein the press actuator (212) comprises a robot.

13. The method of claim 12, further comprising:
attaching the ultrasonic cutting blade (214) to an arm of the robot; and
operating the conveyor system (220) to move the container (250) to a work envelope of the robot.

14. The method of any one of claims 9 to 13,
further comprising positioning the ultrasonic cutting blade (214) substantially normal to the flat surface (250A) of the container (250); or
further comprising positioning the ultrasonic cutting blade (214) at an acute angle to the flat surface (250A) of the container (250).

15. The method of any one of claims 9 to 14,
further comprising adapting the predefined depth based on a thickness of the first surface (250A) of the container (250); and/or
further comprising operating the ultrasonic cutting blade (214) to cut on a plurality of flat surfaces (250A, 250B, 250C) of the container (250).

## Patentansprüche

1. Vorrichtung (100), umfassend:
eine Ultraschallschneidklinge (214), die eine flache Schneidkante (216) mit einer Schneidlänge aufweist;
einen Behälterpositionierer (222), der einen Behälter (250) in einer Position relativ zu der Ultraschallschneidklinge (214) sichert, so dass die flache Schneidkante (216) der Ultraschallschneidklinge (214) derart positioniert werden kann, um in Kontakt mit einer flachen Oberfläche (250A) des Behälters (250) zu sein;
ein Druckaktuator (212), der die flache Oberfläche (250A) des Behälters (250) und die flache Schneidkante (216) der Ultraschallschneidklinge (214) dazu veranlasst, gegeneinander zu drücken,
ein Steuersystem (120), das die Ultraschallschneidklinge (214) und den Druckaktuator (212) dazu betreibt, die Ultraschallschneidklinge (214) zu veranlassen, mit Ultraschall zu vibrieren, während der Behälter (250) und die flache Schneidkante (216) der Ultraschallschneidklinge (214) gegeneinander drücken, bis die Ultraschallschneidklinge (214) die flache Oberfläche (250A) des Behälters um eine vordefinierte Tiefe penetriert;
wobei das Steuersystem (120) dazu konfiguriert ist, den Druckaktuator (212) zu veranlassen, die flache Schneidkante (216) der Ultraschallschneidklinge (214) mit einer vorbestimmten Schneidlinie entlang der ersten Oberfläche (250A) des Behälters (250) auszurichten, wobei die vorbestimmte Schneidlinie im Wesentlichen parallel zu einer Kante des Behälters und etwa 2,54 Zentimeter unterhalb einer oberen Oberfläche (250C) des Behälters (250) ist; und
wobei das Steuersystem (120) dazu konfiguriert ist, den Druckaktuator (212) zu veranlassen, die Ultraschallschneidklinge (214) in einer stationären Stellung relativ zu dem Behälter (250) während einer Schneidoperation zu halten und die flache Schneidkante (216) der Klinge (214) eine Schneidlänge laufen zu lassen, die mindestens eine Länge der ersten Oberfläche (250A) des Behälters (250) ist.

2. Vorrichtung nach Anspruch 1, wobei das Steuersystem (120) dazu konfiguriert ist, die Ultraschallschneidklinge (214) zu veranlassen, sich relativ zu dem Behälter (250) zu bewegen.

3. Vorrichtung nach Anspruch 1,
wobei das Steuersystem (120) dazu konfiguriert ist, den Behälter (250) zu veranlassen, sich relativ zu der Ultraschallschneidklinge (214) zu bewegen; und/oder
wobei die Vorrichtung ferner ein Fördersystem (220) umfasst, das dazu betrieben wird, den Behälter (250) relativ zu der Ultraschallschneidklinge (214) zu bewegen.

4. Vorrichtung nach einem der Ansprüche 1 bis 3, wobei:
der Druckaktuator (212) einen Roboter umfasst;
die Ultraschallschneidklinge (214) an einem Arm des Roboters angebracht ist; und
das Fördersystem (220) dazu betreibbar ist, den Behälter (250) zu einem Arbeitsbereich des Roboters zu bewegen.

5. Vorrichtung nach einem der Ansprüche 1 bis 4, wobei die Schneidlänge mindestens 50,8 Zentimeter beträgt.

6. Vorrichtung nach einem der Ansprüche 1 bis 5,
wobei die Ultraschallschneidklinge (214) im Wesentlichen normal zu der flachen Oberfläche des Behälters (250) positioniert ist; oder
wobei die Ultraschallschneidklinge (214) in einem spitzen Winkel zu der flachen Oberfläche des Behälters (250) positioniert ist.

7. Vorrichtung nach einem der Ansprüche 1 bis 6, wobei die vordefinierte Tiefe eine Tiefe ist, die einer Dicke der ersten Oberfläche (250A) des Behälters (250) entspricht.

8. Vorrichtung nach einem der Ansprüche 1 bis 7, wobei das Steuersystem (120) dazu konfiguriert ist, die Ultraschallschneidklinge (214) dazu zu betreiben, auf einer Mehrzahl von flachen Oberflächen (250A, 250B, 250C) des Behälters (250) zu schneiden.

9. Verfahren (300), umfassend:
Positionieren (302) eines Behälters (250) in einer Position relativ zu einer Ultraschallschneidklinge (214), so dass eine flache Schneidkante (216) der Ultraschallschneidklinge (214) derart positioniert werden kann, um in Kontakt mit einer flachen Oberfläche (250A) des Behälters (250) zu sein;
Betreiben (304) eines Druckaktuators (212) dazu, die flache Oberfläche (250A) des Behälters (250) und die flache Schneidkante (216) der Ultraschallschneidklinge (214) zu veranlassen, gegeneinander zu drücken und die flache Schneidkante (216) der Ultraschallschneidklinge (214) zu veranlassen, sich mit einer vorbestimmten Schneidlinie entlang der ersten Oberfläche (250A) des Behälters (250) auszurichten, wobei die vorbestimmte Schneidlinie im Wesentlichen parallel zu einer Kante des Behälters und etwa 2,54 Zentimeter unterhalb einer oberen Oberfläche (250C) des Behälters (250) ist, und
Betreiben des Druckaktuators (212) dazu, die Ultraschallschneidklinge (214) in einer stationären Stellung relativ zu dem Behälter (250) während einer Schneidoperation zu halten und die flache Schneidkante (216) der Klinge (214) eine Schneidlänge laufen zu lassen, die mindestens eine Länge der ersten Oberfläche (250A) des Behälters (250) ist; und
Betreiben (306) der Ultraschallschneidklinge (214) und des Druckaktuators (212) dazu, die Ultraschallschneidklinge (214) zu veranlassen, mit Ultraschall zu vibrieren, während die flache Oberfläche (250A) des Behälters (250) und die flache Schneidkante (216) der Ultraschallschneidklinge (214) gegeneinander drücken, bis die Ultraschallschneidklinge (214) die flache Oberfläche (250A) des Behälters (250) um eine vordefinierte Tiefe penetriert.

10. Verfahren nach Anspruch 9, ferner umfassend Veranlassen der Ultraschallschneidklinge (214) dazu, sich relativ zu dem Behälter (250) zu bewegen.

11. Verfahren nach Anspruch 9,
ferner umfassend Veranlassen des Behälters (250) dazu, sich relativ zu der Ultraschallschneidklinge (214) zu bewegen; und/oder
ferner umfassend Betreiben eines Fördersystems (220) dazu, den Behälter (250) relativ zu der Ultraschallschneidklinge (214) zu bewegen.

12. Verfahren nach einem der Ansprüche 9 bis 11, wobei der Druckaktuator (212) einen Roboter umfasst.

13. Verfahren nach Anspruch 12, ferner umfassend:
Anbringen der Ultraschallschneidklinge (214) an einem Arm des Roboters; und
Betreiben des Fördersystems (220) dazu, den Behälter (250) zu einem Arbeitsbereich des Roboters zu bewegen.

14. Verfahren nach einem der Ansprüche 9 bis 13,
ferner umfassend Positionieren der Ultraschallschneidklinge (214) im Wesentlichen normal zu der flachen Oberfläche (250A) des Behälters (250); oder
ferner umfassend Positionieren der Ultraschallschneidklinge (214) in einem spitzen Winkel zu der flachen Oberfläche (250A) des Behälters (250).

15. Verfahren nach einem der Ansprüche 9 bis 14,
ferner umfassend Anpassen der vordefinierten Tiefe basierend auf einer Dicke der ersten Oberfläche (250A) des Behälters (250); und/oder
ferner umfassend Betreiben der Ultraschallschneidklinge (214) dazu, auf einer Mehrzahl von flachen Oberflächen (250A, 250B, 250C) des Behälters (250) zu schneiden.

## Revendications

1. Un appareil (100), comprenant :
une lame de coupe ultrasonique (214) qui possède un bord de coupe plat (216) d'une longueur de coupe ;
un positionneur de récipient (222) qui fixe un récipient (250) dans une position par rapport à la lame de coupe ultrasonique (214) de sorte que le bord tranchant plat (216) de la lame de coupe ultrasonique (214) puisse être positionné de façon à être en contact avec une surface plane (250A) du conteneur (250) ;
un actionneur de presse (212) qui amène la surface plate (250A) du récipient (250) et le bord tranchant plat (216) de la lame de coupe ultrasonique (214) à être pressés l'un contre l'autre,
un système de commande (120) qui fait fonctionner la lame de coupe ultrasonique (214) et l'actionneur de presse (212) de façon à amener la lame de coupe ultrasonique (214) à vibrer par ultrasons tandis que le récipient (250) et le bord de coupe plat (216) des lames de coupe ultrasonique (214) sont pressés l'un contre l'autre jusqu'à ce que la lame de coupe ultrasonique (214) pénètre dans la surface plane (250A) du récipient sur une profondeur prédéfinie ;
le système de commande (120) est configuré pour amener l'actionneur de presse (212) à aligner le bord tranchant plat (216) de la lame de coupe ultrasonique (214) avec une ligne de coupe prédéterminée le long de la première surface (250A) du récipient (250), la ligne de découpe prédéterminée étant sensiblement parallèle à un bord du récipient et environ 2,54 centimètres en dessous d'une surface supérieure (250C) du récipient (250) ; et
le système de commande (120) est configuré pour amener l'actionneur de presse (212) à maintenir la lame de coupe ultrasonique (214) dans une position stationnaire par rapport au récipient (250) pendant une opération de coupe et à faire fonctionner le bord de coupe plat (216) de la lame (214) a une longueur de coupe qui est au moins une longueur de la première surface (250A) du récipient (250).

2. L'appareil selon la revendication 1, dans lequel le système de commande (120) est configuré pour amener la lame de coupe ultrasonique (214) à se déplacer par rapport au récipient (250).

3. L'appareil selon la revendication 1,
dans lequel le système de commande (120) est configuré pour amener le récipient (250) à se déplacer par rapport à la lame de coupe ultrasonique (214) ; et/ou
l'appareil comprend en outre un système de convoyeur (220) qui fonctionne de façon à déplacer le récipient (250) par rapport à la lame de coupe ultrasonique (214).

4. L'appareil selon l'une quelconque des revendications 1 à 3, dans lequel :
l'actionneur de presse (212) comprend un robot ;
la lame de coupe ultrasonique (214) est fixée à un bras du robot ; et
le système de transport (220) est apte à fonctionner pour déplacer le conteneur (250) vers une enveloppe de travail du robot.

5. L'appareil selon l'une quelconque des revendications 1 à 4, dans lequel la longueur de coupe est d'au moins 50,8 centimètres.

6. L'appareil selon l'une quelconque des revendications 1 à 5,
dans lequel la lame de coupe ultrasonique (214) est positionnée sensiblement perpendiculairement à la surface plane du récipient (250) ; ou
dans lequel la lame de coupe ultrasonique (214) est positionnée selon un angle aigu par rapport à la surface plane du récipient (250).

7. L'appareil selon l'une quelconque des revendications 1 à 6, dans lequel la profondeur prédéfinie est une profondeur qui correspond à une épaisseur de la première surface (250A) du conteneur (250).

8. L'appareil selon l'une quelconque des revendications 1 à 7, dans lequel le système de commande (120) est configuré pour faire fonctionner la lame de coupe à ultrasons (214) pour couper sur une pluralité de surfaces planes (250A, 250B, 250C) du récipient (250).

9. Un procédé (300) comprenant :
le fait (302) de positionner un récipient (250) dans une position par rapport à une lame de coupe à ultrasons (214) de telle sorte qu'un bord tranchant plat (216) de la lame de coupe à ultrasons (214) puisse être positionné de façon à être en contact avec une surface plane (250A) du conteneur (250) ;
le fait (304) d'actionner un actionneur de presse (212) pour amener la surface plane (250A) du récipient (250) et le bord tranchant plat (216) de la lame de coupe ultrasonique (214) à être pressés l'un contre l'autre et à amener le bord tranchant plat (216) de la lame de coupe ultrasonique (214) à s'aligner avec une ligne de coupe prédéterminée le long de la première surface (250A) du récipient (250), la ligne de coupe prédéterminée étant sensiblement parallèle à un bord du récipient et à environ 2,54 centimètres au-dessous d'une surface supérieure (250C) du récipient (250), et
le fait (212) d'actionner l'actionneur de presse pour maintenir la lame de coupe ultrasonique (214) dans une position stationnaire par rapport au récipient (250) pendant une opération de coupe et pour faire défiler le bord tranchant plat (216) de la lame (214), sur une longueur de coupe qui est au moins une longueur de la première surface (250A) du récipient (250) ; et
le fait (306) de faire fonctionner la lame de coupe ultrasonique (214) et l'actionneur de presse (212) de façon à faire vibrer la lame de coupe ultrasonique (214) par ultrasons tandis que la surface plane (250A) du récipient (250) et le bord tranchant plat (216) de la lame de coupe à ultrasons (214) sont pressés l'un contre l'autre jusqu'à ce que la lame de coupe à ultrasons (214) pénètre dans la surface plane (250A) du récipient (250) sur une profondeur prédéfinie.

10. Le procédé selon la revendication 9, comprenant en outre le fait d'amener la lame de coupe par ultrasons (214) à se déplacer par rapport au conteneur (250).

11. Le procédé selon la revendication 9,
comprenant en outre le fait d'amener le récipient (250) à se déplacer par rapport à la lame de coupe ultrasonique (214) ; et/ou
comprenant en outre le fait de faire fonctionner un système de convoyeur (220) pour déplacer le récipient (250) par rapport à la lame de coupe ultrasonique (214).

12. Le procédé selon l'une quelconque des revendications 9 à 11, dans lequel l'actionneur de presse (212) comprend un robot.

13. Le procédé selon la revendication 12, comprenant en outre :
le fait de fixer la lame de découpe ultrasonore (214) sur un bras du robot ; et
le fait de faire fonctionner le système de convoyage (220) de façon à déplacer le conteneur (250) vers une enveloppe de travail du robot.

14. Le procédé selon l'une quelconque des revendications 9 à 13,
comprenant en outre le fait de positionner la lame de coupe ultrasonique (214) sensiblement perpendiculairement à la surface plane (250A) du récipient (250) ; ou
comprenant en outre le fait de positionner la lame de coupe ultrasonique (214) selon un angle aigu par rapport à la surface plane (250A) du récipient (250).

15. Le procédé selon l'une quelconque des revendications 9 à 14,
comprenant en outre le fait d'adapter la profondeur prédéfinie en fonction d'une épaisseur de la première surface (250A) du conteneur (250) ; et/ou
comprenant en outre le fait de faire fonctionner la lame de coupe ultrasonique (214) pour couper sur une pluralité de surfaces planes (250A, 250B, 250C) du récipient (250).
